# EUROPÄISCHE PATENTANMELDUNG

(11) **EP 1 251 319 A2**
(43) Veröffentlichungstag der Anmeldung: **23.10.2002**
(21) Anmeldenummer: 01129918.7
(22) Anmeldetag: 15.12.2001
(51) Int. Cl.: F24H 1/43, F24H 9/14, F24H 8/00

(54) **Wärmezelle eines Heizgerätes**

(30) Priorität: 20.04.2001 DE 10119402
(71) Anmelder: ROBERT BOSCH GMBH, 70442 Stuttgart (DE)
(72) Erfinder: Waidner, Juergen, 73274 Notzingen (DE)

(57) **Zusammenfassung**

Die Erfindung betrifft ein Modul-System für eine Wärmezelle eines Heizgerätes mit einem Basismodul (1), das einen ersten Wärmeübertrager (3) mit einer gewendelten ersten Leitung (4), die im Basismodul (1) einen Raum (6) umhüllt. Ein erster axialer Abschnitt (7) des Raumes (6) ist als Brennraum ausgebildet, in dem ein Brenner (8) angeordnet ist. Ein zweiter axialer Abschnitt (14) des Raumes (6) schließt an den ersten Raumabschnitt (7) an. Ein erstes Ende (11) der ersten Leitung (4) dient als Vorlauf des Heizgerätes. Das Modul-System besitzt außerdem ein Brennwertmodul (22), das einen zweiten Wärmeübertrager (24) mit einer gewendelten zweiten Leitung (25) enthält. Zur Ausbildung einer kondensierenden Wärmezelle (38) ist das Brennwertmodul (22) in den zweiten Raumabschnitt (14) eingesetzt und ist ein erstes Ende (28) der zweiten Leitung (25) mit dem zweiten Ende (12) der ersten Leitung (4) verbunden. Außerdem dient das zweite Ende (29) der zweiten Leitung (25) als Rücklauf des Heizgerätes.

## Beschreibung

### Stand der Technik

Die Erfindung betrifft die Ausgestaltung von Wärmezellen eines Heizgerätes. Eine solche Wärmezelle enthält üblicherweise einen Brennraum, in dem ein Brenner angeordnet ist. Der Brennraum ist dabei von einem Wärmeübertrager mehr oder weniger umhüllt, der mit einem Wärmeübertragungsmedium, z.B. Wasser, beaufschlagbar ist. Auf diese Weise kann die im Brenner erzeugte Wärmeenergie auf das Wärmeübertragungsmedium übertragen werden, um damit beispielsweise einen Wasservorrat eines Warmwasserspeichers aufzuwärmen. Bei diesen Wärmezellen wird zwischen zwei grundsätzlich unterschiedlichen Arbeitsprinzipien unterschieden, nämlich einerseits kondensierende Wärmezellen und andererseits nicht kondensierende Wärmezellen. Nicht kondensierende Wärmezellen weisen einen relativ einfachen Aufbau auf, da in ihnen kein Kondensat anfällt, das aus der Wärmezelle herausgeführt werden muß. Kondensierende Wärmezellen kommen bei sogenannten "Brennwertgeräten" zum Einsatz, bei denen die Verbrennungsabgase im Wärmeübertrager so weit abgekühlt werden, daß der im Abgas enthaltene Wasserdampf kondensiert. Hierdurch ergibt sich eine besonders effektive Brennstoffausnutzung. Je nach Anwendungsfall kann dabei ein Heizgerät mit kondensierender Wärmezelle oder ein Heizgerät mit nicht kondensierender Wärmezelle von Vorteil sein. Dementsprechend muß der Hersteller der Heizgeräte für jeden Anwendungsfall ein entsprechendes Heizgerät bereitstellen, was mit einem entsprechend großen Aufwand verbunden ist.

### Vorteile der Erfindung

Das erfindungsgemäße Modul-System für eine Wärmezelle eines Heizgerätes mit den Merkmalen des Anspruchs 1 hat demgegenüber den Vorteil, daß ein Basismodul des Modul-Systems, insbesondere unverändert, sowohl bei einem Heizgerät mit kondensierender Wärmezelle als auch bei einem Heizgerät mit nicht kondensierender Wärmezelle zum Einsatz kommt. Dementsprechend reduziert sich der Aufwand zur Bereitstellung dieser beiden Heizgeräte-Varianten, wodurch sich ein wirtschaftlicher Vorteil für den Heizgerätehersteller ergibt. Von besonderer Bedeutung ist hierbei, daß das erfindungsgemäße Modul-System eine nicht kondensierende Wärmezelle bereitstellt, deren Wärmeübertrager, nämlich der erste Wärmeübertrager des Basismoduls, mit einer gewendelten Leitung ausgestattet ist, die mit einem Wärmeübertragungsmedium beaufschlagbar ist.

Das Basismodul kann im wesentlichen ohne weitere Maßnahmen als nicht kondensierende Wärmezelle verwendet werden. Um eine kondensierende Wärmezelle auszubilden, wird in das Basismodul ein Brennwertmodul eingesetzt, das ebenfalls einen durch eine gewendelte zweite Leitung gebildeten zweiten Wärmeübertrager enthält. Der erste Wärmeübertrager des Basismoduls und der zweite Wärmeübertrager des Brennwertmoduls werden dann zur Ausbildung der kondensierenden Wärmezelle in Reihe geschaltet.

Bei einer vorteilhaften Weiterbildung kann das Modul-System einen Füllkörper aufweisen, der zur Ausbildung der nicht kondensierenden Wärmezelle in einen zweiten Raumabschnitt eingesetzt ist, der an einen ersten Raumabschnitt anschließt, wobei diese Raumabschnitte von einer ersten Leitung des ersten Wärmeüberträgers umhüllt sind. Der in den zweiten Raumabschnitt eingesetzte Füllkörper füllt den Querschnitt des zweiten Raumabschnitts im wesentlichen aus und verschließt diesen axial, wobei radial zwischen dem Füllkörper und einem die erste Leitung radial außen umhüllenden Gehäuse des Basismoduls ein erster Ringraum ausgebildet ist, in dem die erste Leitung verläuft und über den der erste Raumabschnitt, in dem ein Brenner angeordnet ist, mit einer Abgasleitung kommuniziert. Durch den eingesetzten Füllkörper werden die Verbrennungsabgase gezwungen, durch den ersten Ringraum abzuströmen. Hierdurch ergibt sich eine verbesserte Wärmeübertragung zwischen den Abgasen und dem durch die gewendelte erste Leitung gebildeten ersten Wärmeübertrager. Der Wirkungsgrad der nicht kondensierenden Wärmezelle wird dadurch erhöht.

Bei einer besonderen Ausführungsform kann das Brennwertmodul eine Außenhülle aufweisen, die bei in den zweiten Raumabschnitt eingesetztem Brennwertmodul den Querschnitt des zweiten Raumabschnitts im wesentlichen ausfüllt und axial verschließt, wobei radial zwischen der Außenhülle und einem die erste Leitung radial außen umhüllenden Gehäuse des Basismoduls ein erster Ringraum ausgebildet ist, in dem die erste Leitung verläuft. Insoweit entspricht das in das Basismodul eingesetzte Brennwertmodul hinsichtlich seiner Außenhülle dem obengenannten Füllkörper. Des weiteren besitzt das Brennwertmodul eine Innenhülle, wobei radial zwischen der Außenhülle und der Innenhülle ein zweiter Ringraum ausgebildet ist, in dem die zweite Leitung verläuft. Die Außenhülle weist an einem vom Brenner abgewandten Endabschnitt des ersten Ringraumes mindestens eine Überströmöffnung auf, über die der erste Ringraum mit dem zweiten Ringraum kommuniziert. Darüber hinaus kommuniziert ein dem Brenner zugewandter Endabschnitt des zweiten Ringraums mit einem Innenraum der Innenhülle, an den eine Abgasleitung angeschlossen ist. Durch diese Maßnahmen ergibt sich für die beim Brenner gebildeten Verbrennungsabgase folgender Strömungsweg: Vom ersten Raumabschnitt, in dem der Brenner angeordnet ist, gelangen die Abgase in den ersten Ringraum und beaufschlagen dort die darin verlaufende erste Leitung. Vom ersten Ringraum strömen die Abgase durch die Überströmöffnung in den zweiten Ringraum und beaufschlagen dort die zweite Leitung. Aus dem zweiten Ringraum treten die Abgase in den Innenraum der Innenhülle über und gelangen von dort in die Abgasleitung, welche die nunmehr abgekühlten Verbrennungsabgase aus der Wärmezelle herausführt. Da das Brennwertmodul in das Basismodul eingesetzt wird, besitzt das mit einer kondensierenden Wärmezelle arbeitende Heizgerät einen sehr kompakten Aufbau.

Bevorzugt wird eine Ausführungsform, bei der das Wärmeübertragungsmedium im zweiten Wärmeübertrager des Brennwertmoduls und die Verbrennungsabgase nach dem Gegenstromprinzip arbeiten. Auch der erste Wärmeübertrager ist vorzugsweise so geschaltet, daß er mit den Abgasen nach dem Gegenstromprinzip arbeitet. Zur Vermeidung einer Kondensatbildung im ersten Wärmeübertrager kann es dort jedoch von Vorteil sein, wenn der erste Wärmeübertrager mit den Abgasen nach dem Gleichstromprinzip arbeitet.

Zweckmäßig sind Ausführungsformen, bei denen die erste Leitung und/oder zweite Leitung kreisförmig oder mehreckig gewendelt sind.

Von besonderem Vorteil sind Ausführungsformen, bei denen der erste Wärmeübertrager und/oder der zweite Wärmeübertrager jeweils aus einer Rippenrohrwendel gebildet ist. Anstelle von Rippenrohrwendeln können auch gewendelte Glattrohre oder Wellschläuche aus Metall zum Einsatz kommen.

Weitere wichtige Merkmale und Vorteile der Erfindung ergeben sich aus den Unteransprüchen, aus den Zeichnungen und aus der zugehörigen Figurenbeschreibung anhand der Zeichnungen.

### Zeichnungen

Ein bevorzugtes Ausführungsbeispiel der Erfindung ist in den Zeichnungen dargestellt und wird im folgenden näher erläutert. Es zeigen, jeweils schematisch,
- Fig. 1: einen Längsschnitt durch eine aus dem erfindungsgemäßen Modul-System ausgebildete nicht kondensierende Wärmezelle und
- Fig. 2: einen Längsschnitt durch eine aus dem erfindungsgemäßen Modul-System ausgebildete kondensierende Wärmezelle.

### Beschreibung des Ausführungsbeispiels

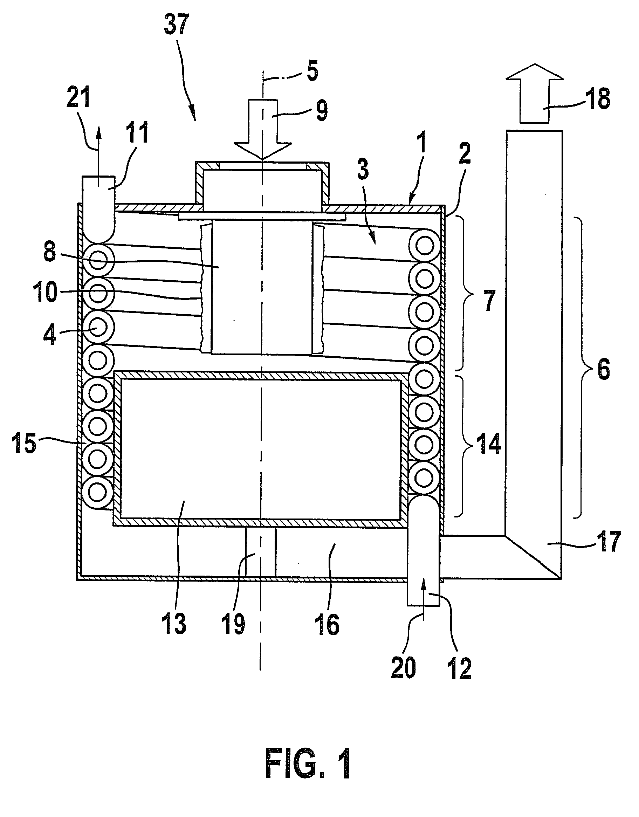

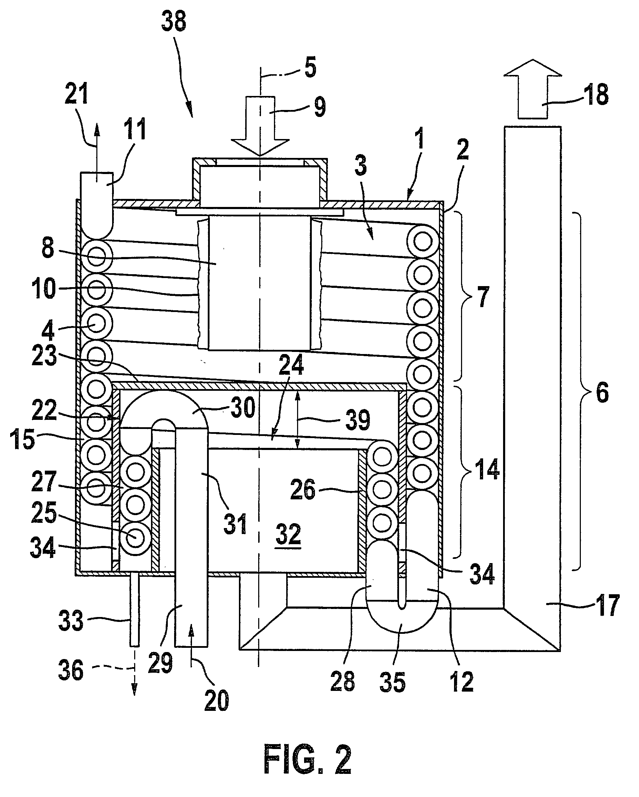

Entsprechend den Fig. 1 und 2 weist ein erfindungsgemäßes Modul-System ein Basismodul 1 auf, das ein zylindrisches Gehäuse 2 besitzt und einen ersten Wärmeübertrager 3 enthält. Der erste Wärmeübertrager 3 ist aus einer ersten Leitung 4 gebildet, die um eine zentrale Wendelachse 5 entlang der Innenseite des Gehäuses 2 schraubenförmig gewendelt ist. Diese erste Leitung 4 ist hier als Rippenrohrwendel ausgebildet und ist mit einem Wärmeübertragungsmedium, z.B. Wasser, beaufschlagbar. Die gewendelte erste Leitung 4 umhüllt im Gehäuse 2 einen zylindrischen Raum 6, der sich entlang der Wendelachse 5 im wesentlichen über die gesamte axiale Länge des Wärmeüberträgers 3 erstreckt. Der Raum 6 ist in den Figuren mit einer geschweiften Klammer gekennzeichnet.

Ein in den Figuren oben dargestellter erster axialer Abschnitt 7 des Raumes 6 ist als Brennraum ausgebildet; dementsprechend enthält dieser erste Raumabschnitt 7 einen koaxial angeordneten Brenner 8, der hier durch einen zylindrischen Metallfolienbrenner gebildet sein kann. Ebenso ist es möglich, einen flächigen Metallfolienbrenner oder einen Brenner mit keramischen Lochplatten oder einen Porenbrenner oder andere Brenner zu verwenden. Bevorzugt wird jedoch ein Brenner 8, der eingangsseitig entsprechend einen Pfeil 9 mit einem brennbaren, gasförmigen Verbrennungsgemisch versorgt wird. Die Zuführung des Verbrennungsgemisches kann dabei mit Hilfe eines hier nicht gezeigten Gebläses erfolgen. Das Basismodul 1 arbeitet somit mit einem gebläseunterstützten Brenner 8. In den Fig. 1 und 2 ist auf der zylindrischen Außenwand des Brenners 8 ein sogenannter "Flammenteppich" 10 eingezeichnet, der sich im Betrieb des Brenners 8 ausbildet.

Ein erstes Ende 11 der ersten Leitung 4 ist an einer dem Brenner 8 zugewandten Stirnseite des Gehäuses 2 aus dem Gehäuse 2 axial herausgeführt. In entsprechender Weise ist auch ein zweites Ende 12 der ersten Leitung 4 an einer vom Brenner 8 abgewandten Seite des Gehäuses 2 aus dem Gehäuse 2 axial herausgeführt.

Das erfindungsgemäße Modul-System umfaßt entsprechend Fig. 1 einen Füllkörper 13, der im wesentlichen aus einem axial geschlossenen Zylinderkörper besteht. Zur Ausbildung einer nicht kondensierenden Wärmezelle 37 wird dieser Füllkörper 13 in einen zweiten axialen Abschnitt 14 des Raumes 6 eingebracht, der sich axial an den ersten Raumabschnitt 7 anschließt. Die Dimensionierung des Füllkörpers 13 ist dabei so gewählt, daß der Füllkörper 13 mit seiner radialen Außenseite an der radialen Innenseite der gewendelten Leitung 4 zur Anlage kommt. Durch die Positionierung des Füllkörpers 13 im zweiten Raumabschnitt 14 wird dieser Raumabschnitt 14 innerhalb der ersten Leitung 4 im wesentlichen ausgefüllt und in axialer Richtung verschlossen. Des weiteren bildet sich durch die Positionierung des Füllkörpers 13 radial zwischen dem Füllkörper 13 und dem Gehäuse 2 ein erster Ringraum 15 aus, der gerade so dimensioniert ist, daß sich die erste Leitung 4 darin erstrecken kann. Dabei ist zwischen den einzelnen Wendeln der gewendelten ersten Leitung 4 noch so viel freier Querschnitt vorhanden, daß über diesen ersten Ringraum 15 eine kommunizierende Verbindung zwischen dem ersten Raumabschnitt 7 und einem axial zwischen dem Füllkörper 13 und dem Gehäuse 2 ausgebildeten Sammelraum 16 besteht. Dieser Sammelraum 16 ist an eine Abgasleitung 17 angeschlossen, aus der entsprechend einem Pfeil 18 gekühlte Verbrennungsabgase aus der Wärmezelle 37 austreten. Um diesen Sammelraum 16 auszubilden, weist der Füllkörper 13 an seiner vom Brenner 8 abgewandten Seite ein Distanzelement 19 auf, über das sich der Füllkörper 13 am Gehäuse 2 abstützt.

Vorzugsweise sind die Enden 11 und 12 des ersten Wärmeüberträgers 3 bzw. der ersten Leitung 4 so angeschlossen, daß das erste Ende 11 als Vorlauf für ein nicht dargestelltes Heizgerät dient, in welches die Wärmezelle 37 eingesetzt wird. Im Unterschied dazu dient das zweite Ende 12 als Rücklauf des Heizgerätes. Dementsprechend tritt relativ kühles Wärmeübertragungsmedium entsprechend einen Pfeil 20 durch das zweite Ende 12 in die erste Leitung 4 ein, während relativ warmes Wärmeübertragungsmedium entsprechend einem Pfeil 21 am ersten Ende 11 aus der Leitung 4 austritt.

Die nicht kondensierende Wärmezelle 37 gemäß Fig. 1 arbeitet wie folgt:

Entsprechend dem Pfeil 9 wird ein brennbares Verbrennungsgemisch gebläseunterstützt in den Brenner 8 eingebracht. Dort bildet sich im Betrieb der Flammenteppich 10 aus, wodurch sich eine intensive Erwärmung der Umgebung des Brenners 8 ergibt. Die sich durch die Verbrennung bildenden Verbrennungsabgase werden durch die Gebläsewirkung aus dem ersten Raumabschnitt 7 verdrängt, wobei die heißen Verbrennungsabgase insbesondere im ersten Ringkanal 15 ihre Wärme mehr oder weniger an die erste Leitung 4 und somit an das darin transportierte Wärmeübertragungsmittel abgeben. Die insoweit abgekühlten Abgase sammeln sich im Sammelraum 16 und werden über die Abgasleitung 17 abgeführt. Die Länge der Leitung 4 ist dabei so auf die Leistung des Brenners 8 abgestimmt, daß eine Kondensierung des in den Abgasen transportierten Wasserdampfs nicht stattfindet. Dementsprechend zeigt Fig. 1 eine nicht kondensierende Wärmezelle 37.

Der zu erwärmende Vorlauf 20 tritt über das zweite Ende 12 in den ersten Wärmeübertrager 3 ein und wird durch die an die erste Leitung 4 abgegebene Wärmeenergie erwärmt. Der erwärmte Vorlauf 21 tritt dann aus dem ersten Ende 11 aus dem ersten Wärmeübertrager 3 aus.

Entsprechend Fig. 2 weist das erfindungsgemäße Modul-System außerdem ein Brennwertmodul 22 auf, das ein zylindrisches, axial verschlossenes Gehäuse besitzt. Dieses Gehäuse wird dabei durch eine Außenhülle 23 gebildet, deren radiale Abmessungen mit denjenigen des Füllkörpers 13 etwa übereinstimmen. Das Brennwertmodul 22 enthält einen zweiten Wärmeübertrager 24, der im wesentlichen durch eine um die Wendelachse 5 gewendelte zweite Leitung 25 gebildet ist. Auch hier wird eine Ausführungsform bevorzugt, bei der die zweite Leitung 25 durch eine Rippenrohrwendel gebildet ist. Diese zweite Leitung 25 ist dabei so im Brennwertmodul 22 untergebracht, daß sie mit ihrer radialen Außenseite an einer radialen Innenseite der Außenhülle 23 anliegt.

Das Brennwertmodul 22 enthält außerdem eine zylindrische Innenhülle 26, die zumindest auf ihrer dem Brenner 8 zugewandten axialen Seite offen ausgebildet ist. Die Innenhülle 26 ist dabei so dimensioniert, daß sie mit ihrer radialen Außenseite an der radialen Innenseite der gewendelten zweiten Leitung 25 anliegt. Bezüglich der axialen Richtung ist die Innenhülle 26 so in der Außenhülle 23 positioniert, daß sie an der vom Brenner 8 abgewandten geschlossenen Axialseite der Außenhülle 23 anliegt, während auf der dem Brenner 8 zugewandten geschlossenen Axialseite der Außenhülle 23 ein Abstand 39 ausgebildet ist. Radial zwischen der Innenhülle 26 und der Außenhülle 23 ist ein zweiter Ringraum 27 ausgebildet, in dem sich die gewendelte zweite Leitung 25 erstreckt. Ein erstes Ende 28 der zweiten Leitung 25 ist an einer vom Brenner 8 abgewandten Seite in axialer Richtung aus dem zweiten Ringraum 27 herausgeführt. Ein zweites Ende 29 der zweiten Leitung 25 ist an einem dem Brenner 8 zugewandten Ende des zweiten Ringraumes 27 über ein Bogenstück 30 und ein Geradenstück 31 durch einen Innenraum 32 der Innenhülle 26 geführt, so daß das zweite Ende 29 an einer vom Brenner 8 abgewandten axialen Stirnseite aus der Außenhülle 23 axial herausgeführt ist. An diesen Innenraum 32 ist außerdem wieder die Abgasleitung 17 angeschlossen.

An einer vom Brenner 8 abgewandten Seite ist an den zweiten Ringraum 27 eine Kondensatablaufleitung 33 angeschlossen.

Zur Ausbildung einer kondensierenden Wärmezelle 38 wird entsprechend Fig. 2 - anstelle des Füllkörpers 13 - das Brennwertmodul 22 in den zweiten Raumabschnitt 14 eingesetzt, wodurch sich auch hier wieder radial zwischen dem Gehäuse 2 und der Außenhülle 23 der erste Ringraum 15 ausbildet, in dem die erste Leitung 4 verläuft. In einem vom Brenner 8 abgewandten Abschnitt enthält die Außenhülle 23 in ihrem Mantel mehrere Überströmöffnungen 34, über die der erste Ringraum 15 mit dem zweiten Ringraum 27 kommuniziert. Der durch den Abstand 39 axial offene zweite Ringraum 27 kommuniziert an der dem Brenner 8 zugewandten Seite mit dem Innenraum 32 der Innenhülle 26. Das erste Ende 28 der zweiten Leitung 25 ist über ein Bogenstück 35 mit dem zweiten Ende 12 der ersten Leitung 4 verbunden. Bei der hier wiedergegebenen Schaltung dient demnach das zweite Ende 29 der zweiten Leitung 25 als Rücklauf für das Heizgerät, das nunmehr mit einer kondensierenden Wärmezelle 38 arbeiten soll.

Die kondensierende Wärmezelle 38 gemäß Fig. 2 arbeitet wie folgt:

Das brennbare Gasgemisch wird gebläseunterstützt entsprechend dem Pfeil 9 in den Brenner 8 eingebracht. Durch die Verbrennungsreaktion wird im ersten Raumabschnitt 7 die erste Leitung 4 mit Wärmestrahlung beaufschlagt. Gleichzeitig werden heiße Abgase gebildet, die in den ersten Ringraum 15 gefördert werden. An dem vom Brenner 8 abgewandten Ende des ersten Ringraumes 15 treten die teilweise gekühlten Abgase in den zweiten Ringraum 27 des Brennwertmoduls 22 ein. Durch den Kontakt mit der zweiten Leitung 25 werden die Abgase noch weiter abgekühlt, und zwar so weit, bis Wasserdampf, der im Abgas transportiert wird, an der zweiten Leitung 25 kondensiert. Aufgrund dieser Kondensatbildung handelt es sich bei Fig. 2 somit um eine kondensierende Wärmezelle 38 oder "Brennwertzelle" . Das Kondensat sammelt sich im zweiten Ringraum 27 und wird über die Kondensatablaufleitung 33 entsprechend einem Pfeil 36 aus der Wärmezelle 38 herausgeführt. Die abgekühlten Abgase gelangen in den Innenraum 32 und werden von da aus über die Abgasleitung 17 entsprechend dem Pfeil 18 aus der Wärmezelle 38 abtransportiert.

Der relativ kühle Rücklauf 20 tritt in das zweite Ende 29 der zweiten Leitung 25 also in den zweiten Wärmeübertrager 24 ein und wird durch die Beaufschlagung der zweiten Leitung 25 mit warmen Abgasen erwärmt. Am ersten Ende 28 der zweiten Leitung 25 gelangt das erwärmte Wärmeübertragungsmittel durch das zweite Ende 12 der ersten Leitung 4 in den ersten Wärmeübertrager 3. Hier erfolgt eine weitere Erwärmung des Wärmeübertragungsmittels, bis dieses am ersten Ende 11 als erwärmter Vorlauf 21 wieder aus der Wärmezelle 38 austritt.

In den hier dargestellten Ausführungsformen strömen das Wärmeübertragungsmittel in der ersten Leitung 4 des ersten Wärmeüberträgers 3 und die Abgase zumindest im ersten Ringraum 15 entsprechend dem Gegenstromprinzip. Bei der Ausführungsform gemäß Fig. 2 ist das Gegenstromprinzip auch bei der Durchströmung der zweiten Leitung 25 des zweiten Wärmeüberträgers 24 realisiert.

Der große Vorteil des erfindungsgemäßen Modul-Systems ist darin zu sehen, daß die in Fig. 1 dargestellte nicht kondensierende Wärmezelle 37 und die in Fig. 2 dargestellte kondensierende Wärmezelle 38 jeweils dasselbe Basismodul 1 aufweisen. Durch diese Bauform können sehr viele Einzelteil gleich gestaltet werden, wodurch die Herstellungskosten trotz unterschiedlicher Varianten relativ gering sind.

## Patentansprüche

1. Modul-System für eine Wärmezelle eines Heizgerätes mit folgenden Merkmalen:
A: das Modul-System weist ein Basismodul (1) auf,
B: das Basismodul (1) enthält einen ersten Wärmeübertrager (3) mit einer um eine Wendelachse (5) gewendelten ersten Leitung (4), die mit einem Wärmeübertragungsmedium beaufschlagbar ist,
C: die erste Leitung (4) umhüllt im Basismodul (1) einen Raum (6),
D: ein erster axialer Abschnitt (7) des Raumes (6) ist als Brennraum ausgebildet, in dem ein Brenner (8) angeordnet ist,
E: ein zweiter axialer Abschnitt (14) des Raumes (6) schließt an den ersten Raumabschnitt (7) an,
F: ein erstes Ende (11) der ersten Leitung (4) dient als Vorlauf (21) des Heizgerätes,
G: das Modul-System weist ein Brennwertmodul (22) auf,
H: das Brennwertmodul (22) enthält einen zweiten Wärmeübertrager (24) mit einer um eine Wendelachse (5) gewendelten zweiten Leitung (25), die mit Wärmeübertragungsmedium beaufschlagbar ist,
I: zur Ausbildung einer nicht kondensierenden Wärmezelle (37) dient ein zweites Ende (12) der ersten Leitung (4) als Rücklauf (20) des Heizgerätes,
J: zur Ausbildung einer kondensierenden Wärmezelle (38) ist das Brennwertmodul (22) in den zweiten Raumabschnitt (14) eingesetzt, ist ein erstes Ende (28) der zweiten Leitung (25) mit dem zweiten Ende (12) der ersten Leitung (4) verbunden und dient das zweite Ende (29) der zweiten Leitung (25) als Rücklauf (20) des Heizgerätes.

2. Modul-System nach Anspruch 1,
**dadurch gekennzeichnet, daß** das Modul-System einen Füllkörper (13) aufweist, der zur Ausbildung der nicht kondensierenden Wärmezelle (37) in den zweiten Raumabschnitt (14) eingesetzt ist, wobei der Füllkörper (13) den Querschnitt des zweiten Raumabschnitts (14) im wesentlichen ausfüllt und axial verschließt, wobei radial zwischen dem Füllkörper (13) und einem die erste Leitung (4) radial außen umhüllenden Gehäuse (2) des Basismoduls (1) ein erster Ringraum (15) ausgebildet ist, in dem die erste Leitung (4) verläuft und über den der erste Raumabschnitt (7) mit einer Abgasleitung (17) kommuniziert.

3. Modul-System nach Anspruch 1 oder 2,
**dadurch gekennzeichnet,**
**daß** das Brennwertmodul (22) eine Außenhülle (23) aufweist, die bei in den zweiten Raumabschnitt (14) eingesetztem Brennwertmodul (22) den Querschnitt des zweiten Raumabschnitts (14) im wesentlichen ausfüllt und axial verschließt, wobei radial zwischen der Außenhülle (23) und einem die erste Leitung (4) radial außen umhüllenden Gehäuse (2) des Basismoduls (1) ein erster Ringraum (15) ausgebildet ist, in dem die erste Leitung (4) verläuft,
**daß** das Brennwertmodul (22) eine Innenhülle (26) aufweist,
wobei radial zwischen der Außenhülle (23) und der Innenhülle (26) ein zweiter Ringraum (27) ausgebildet ist, in dem die zweite Leitung (25) verläuft,
wobei die Außenhülle (23) an einem vom Brenner (8) abgewandten Endabschnitt des ersten Ringraumes (15) mindestens eine Überströmöffnung (34) aufweist, über die der erste Ringraum (15) mit dem zweiten Ringraum (27) kommuniziert,
wobei ein dem Brenner (8) zugewandter Endabschnitt des zweiten Ringraums (27) mit einem Innenraum (32) der Innenhülle (26) kommuniziert,
wobei an den Innenraum (32) eine Abgasleitung (17) angeschlossen ist.

4. Modul-System nach Anspruch 3,
**dadurch gekennzeichnet, daß** das eine Ende (29) der zweiten Leitung (25) an der dem Brenner (8) zugewandten Seite aus dem zweiten Ringraum (27) austritt und durch den Innenraum (32) der Innenhülle (26) aus dem Brennwertmodul (22) herausgeführt ist und
daß das andere Ende (28) der zweiten Leitung (25) an der vom Brenner (8) abgewandten Seite aus dem zweiten Ringraum (27) austritt und aus dem Brennwertmodul (22) herausgeführt ist.

5. Modul-System nach Anspruch 4,
**dadurch gekennzeichnet, daß** das durch den Innenraum (32) der Innenhülle (26) aus dem Brennwertmodul (22) herausgeführte Ende das als Rücklauf des Heizgerätes dienende zweite Ende (29) der zweiten Leitung (25) ist.

6. Modul-System zumindest nach Anspruch 2 oder 3,
**dadurch gekennzeichnet, daß** das eine Ende (12) der ersten Leitung (4) an der vom Brenner (8) abgewandten Seite aus dem ersten Ringraum (15) austritt und aus dem Basismodul (1) herausgeführt ist.

7. Modul-System nach Anspruch 6,
**dadurch gekennzeichnet, daß** zur Ausbildung der nicht kondensierenden Wärmezelle (37) das am ersten Ringraum (15) aus dem Basismodul (1) herausgeführte Ende das als Rücklauf des Heizgerätes dienende zweite Ende (12) der ersten Leitung (4) ist.

8. Modul-System zumindest nach Anspruch 3,
**dadurch gekennzeichnet, daß** an einer vom Brenner (8) abgewandten Seite eine Kondensatablaufleitung (33) an den zweiten Ringraum (27) angeschlossen ist.

9. Modul-System nach einem der Ansprüche 1 bis 8,
**dadurch gekennzeichnet, daß** die erste Leitung (4) und/oder die zweite Leitung (25) kreisförmig oder mehreckig gewendelt ist.

10. Modul-System nach einem der Ansprüche 1 bis 9,
**dadurch gekennzeichnet, daß** die Leitung (4,25) des ersten Wärmeüberträgers (3) und/oder des zweiten Wärmeüberträgers (24) durch eine Rippenrohrwendel gebildet ist.
